# EUROPÄISCHE PATENTANMELDUNG

(11) **EP 0 524 492 A1**
(43) Veröffentlichungstag der Anmeldung: **27.01.1993**
(21) Anmeldenummer: 92111645.5
(22) Anmeldetag: 09.07.1992
(51) Int. Cl.: C08F 8/32

(54) **Polymethacryl-N-alkylimide und Verfahren zu ihrer Herstellung**

(30) Priorität: 25.07.1991 DE 4124638
(71) Anmelder: RÖHM GMBH, D-64293 Darmstadt (DE)
(72) Erfinder: Brehm, Manfred, Dr., W-8750 Aschaffenburg (DE); Rau, Norbert, Dr., 64372 Ober-Ramstadt (DE); Hofmann, Ingrid, Dr., W-6238 Hofheim (DE)

(57) **Zusammenfassung**

Polymethacryl-N-alkylimide mit gemischten N-Alkylresten und niedrigen Gehalten an Carboxyl- und Carbonsäureanhydrid-Gruppen lassen sich auf wirtschaftliche Weise durch Umsetzung von Polymethylmethacrylat mit Gemischen primärer Alkylamine herstellen. Ihre Glasübergangstemperaturen sind in einem weiten Bereich wählbar.

## Beschreibung

Polymethacryl-N-alkylimide sind eine Klasse von thermoplastischen Kunststoffen, die zwar seit langem bekannt sind, aber erst gegenwärtig praktische Bedeutung zu gewinnen anfangen. Sie unterscheiden sich von Polymethylmethacrylat durch eine höhere Glasübergangstemperatur.

### Stand der Technik

Polymethacryl-N-methylimid hat eine Glasübergangstemperatur von 185^{o}C und übertrifft damit die Glasübergangstemperatur von Polymethylmethacrylat, die bei 113^{o}C liegt, bei weitem. Die höhere Glasübergangstemperatur bietet den Vorteil, daß man aus diesem Kunststoff Formkörper herstellen kann, die sich für wesentlich höhere Gebrauchstemperaturen eignen als solche aus Polymethylmethacrylat. Sie ist aber mit dem Nachteil verbunden, daß sehr hohe Temperaturen für die thermoplastische Verarbeitung erforderlich sind. Abgesehen von dem hohen Energiebedarf sind so hohe Temperaturen wegen beginnender thermischer Zersetzung problematisch.

In der DE-C 26 52 118 ist die Herstellung von Polymethacryl-N-alkylimiden durch Umsetzung von Polymethylmethacrylat mit primären Aminen beschrieben. Durch Einsatz einer begrenzten Aminmenge, die zur vollständigen Umsetzung aller Estergruppen des Polymethylmethacrylats nicht ausreicht, erhält man Polymere, die neben den Methacryl-N-alkylimid-Einheiten mehr oder weniger große Anteile der ursprünglichen Methylmethacrylat-Einheiten enthalten. Die Glasübergangstemperatur dieser Polymeren liegt zwischen denen des Polymethylmethacrylats und des reinen Polymethacryl-N-alkylimids und kann somit durch die Menge des eingesetzten Amins gezielt eingestellt werden. Auf diese Weise kann eine Glasübergangstemperatur gewählt werden, die für die vorgesehene Verwendung des Kunststoffes hoch genug ist, aber eine niedrigere Verarbeitungstemperatur zuläßt als das reine Polymethacryl-N-alkylimid.

Die nur teilweise Umsetzung der Estergruppen des zugrundeliegenden Polymethylmethacrylats bringt indessen den Nachteil mit sich, daß neben den Methacryl-N-alkylimid-Einheiten stets auch Einheiten der Methacrylsäure und des Methacrylsäureanhydrids gebildet werden, die sich nachteilig auf die Polymerisateigenschaften auswirken. Bei Anteilen dieser Einheiten von 4 bis 10 Gew.-% ist die Witterungsbeständigkeit beeinträchtigt. Außerdem erweisen sich die Polymerisate als schlecht verträglich mit anderen Polymeren. Dadurch werden die Möglichkeiten eingeschränkt, die Wärmeformbeständigkeit anderer Polymere durch Zusatz von teilimidierten Polymethacryl-N-alkylimiden zu erhöhen.

In der EP-A 216 505 wird vorgeschlagen, die Carbonsäure- und Carbonsäureanhydrid-Reste mit Alkylierungsmitteln zu den entsprechenden Esterresten umzusetzen, um die Witterungsbeständigkeit und die Polymer-Mischbarkeit zu verbessern. Dies erfordert jedoch einen sehr aufwendigen zusätzlichen Verfahrensschritt und den Einsatz teurer Hilfschemikalien, wie Ameisensäure-orthoester.

Die Bildung der Carbonsäure- und Anhydridgruppen wird weitgehend unterdrückt, wenn die Imidierung bis zur nahezu vollständigen Umsetzung aller Estergruppen fortgesetzt wird.

Setzt man zur Imidierung die homologe Reihe der niederen n-Alkylamine ein, so erhält man weitgehend carbonsäure- und anhydridfreie Polymethacryl-N-alkylimide mit abgestuften Glasübergangstemperaturen:

| | |
|---|---|
| Polymethacryl-N-methylimid | 185^{o}C |
| Polymethacryl-N-ethylimid | 164^{o}C |
| Polymethacryl-N-propylimid | 137^{o}C |
| Polymethacryl-N-butylimid | 121^{o}C |

Die Einstellung gewünschter Glasübergangstemperaturen zwischen den angegebenen Werten durch unvollständige Umsetzung der Estergruppen würde wieder zu Polymethacryl-N-alkylimiden mit Carboxyl- bzw. Anhydridgruppen führen.

### Aufgabe und Lösung

Es besteht Bedarf an einer Palette von Polymethacryl-N-alkylimiden mit abgestuften Glasübergangstemperaturen, die von Carbonsäure- und Carbonsäureanhydridgruppen weitgehend frei sind und sich auf wirtschaftliche Weise herstellen lassen.

Es wurde gefunden, daß diese Aufgabe durch Polymethacryl-N-alkylimide, aufgebaut aus
A) zyklischen Einheiten eines ersten Dimethacryl-N-alkylimids,
B) zyklischen Einheiten wenigstens eines zweiten, von den Einheiten A verschiedenen Dimethacryl-N-alkylimids,
C) gegebenenfalls Einheiten weiterer äthylenisch ungesättigter, radikalisch polymerisierbarer Monomere
gelöst wird.

### Ausführung der Erfindung

Durch Umsetzung von Polymethylmethacrylat mit einem Gemisch von z.B. Methylamin und n-Butylamin erhält man Polymethacryl-N-alkylimide mit gemischten Alkylresten, wobei die Glasübergangstemperaturen je nach dem Mischungsverhältnis der N-Methyl- und der N-Butyl-Gruppen zwischen den Grenzwerten der jeweils reinen Polymethacryl-N-alkylimide liegen:

| Mischungverhältnis Methyl/Butyl (Mol-%) | Glasübergangstemperatur ^{o}C |
|---|---|
| 56 : 44 | 148 |
| 64 : 36 | 152 |
| 67 : 33 | 158 |
| 98 : 2 | 184 |

Der Gehalt an Methacrylsäure- und -anhydrid-Einheiten liegt bei allen Mischungsverhältnissen unter 4 Gew.-%. In dieser Größenordnung wirken sie sich praktisch nicht nachteilig auf die Witterungsbeständigkeit und die Polymermischbarkeit aus. Das Verhältnis der Einheiten A und B liegt vorzugsweise in einem solchen Bereich, daß die Glasübergangstemperatur des Polymethacryl-N-alkylimids 130 bis 170^{o}C beträgt.

Bei der Herstellung aller oben genannter Polymeren entsteht als flüchtiges Reaktionsprodukt ein Gemisch aus Methanol, Methylamin, n-Butylamin sowie geringen Mengen an Di- und Trimethylamin und Methyl- und Dimethyl-butylamin. Es kann in einer Destillationsanlage aufgearbeitet werden, die in fachüblicher Weise auf die Zerlegung dieses Gemisches optimiert ist. Dadurch wird ein hoher Grad an Wirtschaftlichkeit gewährleistet. Würde man stattdessen eine ähnliche Produktpalette aus der homologen Reihe der Polymethacryl-N-alkylimide erzeugen, so müßte eine entsprechende Zahl von Alkylaminen vorrätig gehalten und umgesetzt werden. Die aufzuarbeitenden Reaktionsgemische enthielten je nach dem eingesetzten Alkylamin unterschiedliche Bestandteile, so daß eine Optimierung der Destillationsanlage auf ein bestimmtes Gemisch nicht möglich wäre.

Es ist zweckmäßig, die beiden Alkylamine so zu wählen, daß die entsprechenden reinen Polymethacryl-N-alkylimide die Endglieder der gewünschten Reihe von thermoplastischen Kunststoffen mit ansteigender Glasübergangstemperatur bilden. Die Wahl von Methylamin als eines der beiden einzusetzenden Amine ist vorteilhaft, weil man dadurch eine hohe Obergrenze des Variationsbereichs für die Glasübergangstemperatur erhält. Außerdem ist Methylamin preisgünstig und besonders reaktionsfähig. Als zweites Amin wird vorzugsweise dasjenige Alkylamin gewählt, bei dessen alleiniger Verwendung die niedrigste Glasübergangstemperatur der gewünschten Produktpalette erreicht wird. Die Zwischenstufen sind dann erfindungsgemäß durch entsprechende Abmischungen von Methylamin und dem zweiten Amin zugänglich.

Bei dieser Wahl bietet n-Butylamin den Vorteil, daß es eine niedrige Untergrenze des Variationsbereichs für die Glasübergangstemperatur erreichen läßt. Durch den Einsatz noch höherer Alkylamine läßt sich der Variationsbereich zwar zu noch niedrigeren Temperaturen erweitern, jedoch kommt man dabei dem Methylmethacrylat nahe; es besteht kein Bedarf nach neuen Kunststoffen in diesem Erweichungsbereich. Der Einsatz noch höherer Alkylamine kann gegebenenfalls trotzdem wirtschaftlich sein, wenn man davon zum Erreichen einer gewünschten Glasübergangstemperatur weniger benötigt als von einem Amin mit kleinerem Alkylrest. Da die Preise der verschiedenen Alkylamine erheblich voreinander abweichen können, hängt die Auswahl der einzusetzenden Alkylamine stark von wirtschaftlichen Gegebenheiten ab. Die Erfindung gestattet es, diesen Gegebenheiten weitgehend Rechnung zu tragen, ohne die Breite der Produktpalette empfindlich einzuengen. Im allgemeinen sind Alkylamine mit 1 bis 20 Kohlenstoffatomen im Alkylrest geeignet. Bevorzugt sind Amine mit 1 bis 8 und am meisten bevorzugt Amine mit 1 bis 4 Kohlenstoffatomen im Alkylrest.

Die Reaktionsfähigkeit der Alkylamine nimmt in der Regel mit wachsender Zahl der Kohlenstoffatome im Alkylrest ab. Um die Umsetzung der höheren Alkylamine im vorgesehenen Umfang zu gewährleisten, kann es vorteilhaft sein, in der Anfangsstufe der Reaktion allein oder bevorzugt das primäre Alkylamin mit dem größten Alkylrest und in einer nachfolgenden Stufe das primäre Alkylamin mit dem kleinsten Alkylrest einzusetzen.

Um eine weitgehende Umsetzung der Methacrylmonomereinheiten zu Methacrylimid-Einheiten zu erreichen, ist ein deutlicher Überschuß über die stöchiometrisch erforderliche Menge von 1 Mol Amin je 2 Mol an Methacryl-Einheiten vorteilhaft. Die Gesamtmenge der Alkylamine beträgt in der Regel wenigstens 0,6 Mol/Mol und vorzugsweise 1 bis 1,6 Mol/Mol.

Als Ausgangspolymer für die Herstellung der neuen Polymethacryl-N-alkylimide ist Polymethylmethacrylat (PMMA) besonders geeignet. Vor allem PMMA-Formmassen mit Molekulargewichten von 50 000 bis 200 000 Dalton (Gewichtsmittelwert) kommen in Betracht, weil die daraus herstellbaren Polymethacryl-N-alkylimide thermoplastisch verarbeitbar sind. Sie enthalten häufig kleine Anteile von polymerisierten Einheiten anderer Monomere. Soweit es sich um nicht imidierbare Einheiten, wie z.B. Styrol, handelt, treten sie in dem erzeugten Polymethacryl-N-alkylimid unverändert wieder auf.

Der Imidierungsreaktion sind nahezu alle Methacryl-Monomereinheiten zugänglich, z.B. andere Methacrylalkylester-, Methacrylsäure-, Methacrylsäureanhydrid- oder Methacrylamid-Einheiten, die gegebenenfalls am Stickstoffatom substituiert sein können. Acrylmonomere reagieren ähnlich, führen aber - wenn sie in merklichen Anteilen vorliegen - zu Polymeren mit abweichenden Eigenschaften.

Um die vorteilhaften Eigenschaften der Polymethacryl-N-alkylimide zu wahren, sollen die Einheiten A und B zusammengenommen wenigstens 80, vorzugsweise wenigstens 90 Gew.-%, bezogen auf das Polymerisatgewicht, ausmachen. In der Regel bilden die Einheiten A 10 bis 90 Gew.-% und die Einheiten B 90 bis 10 Gew.-% des Polymerisats.

Die Umsetzung wird zweckmäßig bei erhöhter Temperatur durchgeführt, insbesondere oberhalb der Schmelz-Temperatur des Ausgangspolymeren. Für PMMA ist ein Temperaturbereich von 160 bis 350^{o}C geeignet. Die Reaktion kann in An- oder Abwesenheit von Lösungs- oder Verdünnungsmitteln durchgeführt werden.

Bei der Umsetzung von PMMA bietet sich Methanol als Verdünnungsmittel an, weil bei der Imidierung ohnehin Methanol entsteht und somit keine zusätzliche Stofftrennung bei der Aufarbeitung des Reaktionsgemisches notwendig wird. Allerdings ist Methanol kein Lösungsmittel für Polymethacrylalkylimide. Als solches kann z.B. N-Methylpyrrolidon verwendet werden; es gestattet die Durchführung der Imidierung im Lösungszustand. Zur Gewinnung der Formmasse kann die erhaltene Polymerisatlösung in an sich bekannter Weise in einem Entgasungsextruder von dem Lösungsmittel befreit werden. Während der Umsetzung stellt sich der der Temperatur entsprechende überatmosphärische Druck ein. Als Reaktoren eignen sich druckfeste Vorrichtungen, die eine gründliche Durchmischung der Bestandteile bewirken, wie Rührkessel, Kneter oder Ein- oder Mehrschnecken-Extruder. Die Reaktionszeiten bzw. Verweilzeiten können zwischen 10 Sekunden und 20 Stunden liegen, wobei für die Umsetzung im Rührkessel Zeiten über 30 Minuten und für die Umsetzung im Extruder Zeiten unter 30 Minuten in Betracht kommen.

Bei einer bevorzugten Ausführungsform der Erfindung wird die Umsetzung in Abwesenheit von Lösungs- und Verdünnungsmitteln kontinuierlich in einem Mehrschneckenextruder durchgeführt. In eine aufgeschmolzene PMMA-Formmasse werden an wenigstens zwei in Fließrichtung aufeinanderfolgenden Stellen Butylamin und Methylamin eingepreßt. Nach dem Durchlaufen der Umsetzungszone werden in einer Entgasungszone die flüchtigen Bestandteile abgezogen und aufgearbeitet. Das Polymethacryl-N-alkylimid wird am Ende des Extruders als Schmelze ausgetragen, gekühlt und granuliert.

### BEISPIELE

### Beispiel 1

In einen 0,5 1-Rührautoklav werden 40 g (0,4 Grundmol) PMMA-Formmasse mit einer red. Viskosität von 70 ml/g, 200 ml N-Methylpyrrolidon, 9,3 g (0,3 Mol) Methylamin als 40-prozentige wäßrige Lösung und 7,3 g (0,1 Mol) n-Butylamin eingefüllt. Der Autoklav wird verschlossen und 7 Stunden auf 205^{o}C erhitzt. Nach dem Abkühlen wird die Reaktionslösung entnommen, mit 100 ml Tetrahydrofuran verdünnt und in 2,5 l einer salzsauren Ethanol/Wasser-Mischung (2:1) ausgefällt. Nach Umfällen aus THF/Wasser wird das Polymerisat abfiltriert, nachgewaschen und getrocknet.

Die Analyse des Polymerisats ergab folgende Bestandteile:
82,2 Gew.-% Methacryl-N-methylimid-Einheiten,
13,6 Gew.-% Methacryl-N-butylimid-Einheiten,
0,4 Gew.-% Methacryl-N-butylamid-Einheiten,
0,3 Gew.-% Methylmethacrylat-Einheiten,
2,9 Gew.-% Methacrylsäure-Einheiten,
Glasübergangstemperatur (DSC-Messung) 169^{o}C,
Red. Viskosität nₛₚ/c = 65 ml/g.

Vergleichsversuche mit a) Methylamin oder b) n-Butylamin allein:
a) Die Arbeitsweise gemäß Beispiel 1 wird wiederholt, jedoch wird als Amin nur 12,4 g (0,4 Mol) Methylamin eingesetzt.
b) Die Arbeitsweise gemäß Beispiel 1 wird wiederholt, jedoch wird als Amin nur 58,4 g (0,8 Mol) n-Butylamin eingesetzt und die Umsetzungstemperatur auf 220^{o}C gesteigert.

Die Analyse der Polymerisate ergab folgende Bestandteile: (in Gew.-%):

| | a | b |
|---|---|---|
| Methacryl-N-methylimid-Einheiten | 99,0 | - |
| Methacryl-N-butylimid-Einheiten | - | 95,3 |
| Methacryl-N-butylamid-Einheiten | - | 3,5 |
| Methylmethacrylat-Einheiten | <0,3 | 0,3 |
| Methacrylsäure-Einheiten | 0,8 | 1,1 |
| Glasübergangstemperatur (DSC-Messung) | 185^{o}C | 121^{o}C |
| Red. Viskosität nₛₚ/c in ml/g | 71 | 70 |

### Beispiel 2

In einen 0,5 l-Rührautoklav werden 40 g (0,4 Grundmol) PMMA-Formmasse mit einer red. Viskosität von 70 ml/g, 200 ml N-Methylpyrrolidon und 12,4 g (0,17 Mol) n-Butylamin eingefüllt. Der Autoklav wird verschlossen und 1 Stunde auf 230^{o}C erhitzt. Dann wird auf 205^{o}C gekühlt und mittels einer Druckpumpe 14,3 g (0,46 Mol) Methlyamin als 40-prozentige wäßrige Lösung eingepreßt und 4 Stunden unter Rühren bei 205^{o}C reagieren gelassen. Nach dem Abkühlen wird die Reaktionslösung entnommen, mit 100 ml Tetrahydrofuran verdünnt, filtriert und in 2,5 l Wasser/Ethanol (1:2) ausgefällt. Das aus THF/Wasser umgefällte Polymerisat wird abfiltriert, nachgewaschen und getrocknet.

Die Analyse des Polymerisats ergab folgende Bestandteile:
50,3 Gew.-% Methacryl-N-methylimid-Einheiten,
46,1 Gew.-% Methacryl-N-butylimid-Einheiten,
2,1 Gew.-% Methacryl-N-butylamid-Einheiten,
0,3 Gew.-% Methylmethacrylat-Einheiten,
1,2 Gew.-% Methacrylsäure-Einheiten,
Glasübergangstemperatur (DSC-Messung) 157^{o}C,
Red. Viskosität nₛₚ/c = 66 ml/g.

### Beispiel 3

In einen 0,5 l-Rührautoklav werden 40 g (0,4 Grundmol) PMMA-Formmasse mit einer red. Viskosität von 70 ml/g und 200 ml N-Methylpyrrolidon eingefüllt. Der Autoklav wird verschlossen und auf 220^{o}C erhitzt. Dann wird mit einer Druckpumpe eine Mischung von 6,2 g (0,2 Mol) Methylamin als 40-prozentige wäßrige Lösung und 14,6 g (0,2 Mol) n-Butylamin eingepreßt und 5 Stunden bei 220^{o}C gerührt. Danach werden 200 ml Tetrahydrofuran zugepumpt. Nach dem Abkühlen wird die Reaktionslösung entnommen und in 2,5 l salzsaurem Wasser ausgefällt. Nach Umfällen aus Tetrahydrofuran/Wasser wird das Polymerisat abfiltriert, nachgewaschen und getrocknet.

Die Analyse des Polymerisats ergab folgende Bestandteile:
57,2 Gew.-% Methacryl-N-methylimid-Einheiten,
38,5 Gew.-% Methacryl-N-butylimid-Einheiten,
0,0 Gew.-% Methacryl-N-butylamid-Einheiten,
0,3 Gew.-% Methylmethacrylat-Einheiten,
4,0 Gew.-% Methacrylsäure-Einheiten,
Glasübergangstemperatur (DSC-Messung) 152^{o}C,
Red. Viskosität nₛₚ/c = 70 ml/g.

### Beispiel 4

Das Verfahren gemäß Beispiel 3 wird mit dem Unterschied wiederholt, daß das Methylamin erst 1 Stunde nach dem Butylamin eingepreßt wird.

Die Analyse des Polymerisats ergab folgende Bestandteile:
49,0 Gew.-% Methacryl-N-methylimid-Einheiten,
46,3 Gew.-% Methacryl-N-butylimid-Einheiten,
0,0 Gew.-% Methacryl-N-butylamid-Einheiten,
0,6 Gew.-% Methylmethacrylat-Einheiten,
4,1 Gew.-% Methacrylsäure-Einheiten,
Glasübergangstemperatur (DSC-Messung) 148^{o}C,
Red. Viskosität nₛₚ/c = 72 ml/g.

### Beispiele 5 und 6

Das Verfahren gemäß Beispiel 3 wird mit dem Unterschied wiederholt, daß anstelle von N-Methylpyrrolidon Methanol eingesetzt wird. Beim Beispiel 6 wird das Methylamin erst 1 Stunde nach dem Butylamin eingepreßt.

Die Analyse der Polymerisate ergab folgende Bestandteile:
Beisp. 5 / 6
60,5 58,3 Gew.-% Methacryl-N-methylimid-Einheiten,
35,5 35,4 Gew.-% Methacryl-N-butylimid-Einheiten,
2,0 1,5 Gew.-% Methacryl-N-butylamid-Einheiten,
1,4 2,1 Gew.-% Methylmethacrylat-Einheiten,
2,6 2,7 Gew.-% Methacrylsäure-Einheiten,
Glasübergangstemperatur (DSC-Messung) 158^{o}C / 155^{o}C
Red. Viskosität nₛₚ/c = 65 / 70 ml/g.

Aus dem Vergleich der Beispiele 3/4 einerseits und 5/6 andererseits folgt, daß der Einfluß der verzögerten Zugabe des Methylamins in Methanol als Lösungsmittel geringer ist als in N-Methylpyrrolidon als Lösungsmittel.

## Patentansprüche

1. Polymethacrylalkylimid, aufgebaut aus
A) zyklischen Einheiten eines ersten Dimethacryl-N-alkylimids,
B) zyklischen Einheiten wenigstens eines zweiten, von den Einheiten A verschiedenen Dimethacryl-N-alkylimids,
C) gegebenenfalls Einheiten weiterer äthylenisch ungesättigter, radikalisch polymerisierbarer Monomerer.

2. Polymethacrylalkylimid nach Anspruch 1, dadurch gekennzeichnet, daß weniger als 5 Gew.-%, bezogen auf das Polymerisatgewicht, Carboxylgruppen oder Carbonsäureanhydridgruppen im Polymerisat enthalten sind.

3. Polymethacrylalkylimid, nach Anspruch 1 oder 2, dadurch gekennzeichnet, daß die Einheiten A und B zusammengenommen wenigstens 80 Gew.-%, bezogen auf das Polymerisatgewicht, ausmachen.

4. Polymethacrylalkylimid, nach einem oder mehreren der Ansprüche 1 bis 3, dadurch gekennzeichnet, daß die Einheiten A 10 bis 90 Gew.-% und die Einheiten B 90 bis 10 Gew.-% ausmachen.

5. Polymethacrylalkylimid, nach einem oder mehreren der Ansprüche 1 - 4, gekennzeichnet durch eine Glasübergangstemperatur von 130 bis 170^{o}C.

6. Polymethacrylalkylimid nach einem oder mehreren der Ansprüche 1 bis 5, dadurch gekennzeichnet, daß die N-Alkylgruppen in den Einheiten A ein C-Atom und in den Einheiten B 2 bis 20 C-Atome enthalten.

7. Verfahren zur Herstellung von Polymethacrylalkylimiden durch Umsetzung von Methacrylpolymeren mit Alkylaminen, dadurch gekennzeichnet, daß als Alkylamine wenigstens zwei verschiedene primäre Alkylamine eingesetzt werden.

8. Verfahren nach Anspruch 7, dadurch gekennzeichnet, daß pro Grundmol des Methacrylpolymeren wenigstens 0,5 Mol an Alkylaminen eingesetzt werden.

9. Verfahren nach Anspruch 7 oder 8, dadurch gekennzeichnet, daß als Methacrylpolymer Polymethylmethacrylat eingesetzt wird.

10. Verfahren nach einem oder mehreren der Ansprüche 7 bis 9, dadurch gekennzeichnet, daß das Methacrylpolymer in wenigstens zwei Stufen mit den Alkylaminen umgesetzt wird, wobei in der ersten Stufe das primäre Alkylamin mit dem größten Alkylrest und in einer nachfolgenden Stufe das primäre Alkylamin mit dem kleinsten Alkylrest eingesetzt wird.
